# EUROPEAN PATENT SPECIFICATION

(11) **EP 3 845 747 B1**
(45) Date of publication and mention of the grant of the patent: **11.10.2023**
(21) Application number: 20217693.9
(22) Date of filing: 29.12.2020
(51) Int. Cl.: F02C 3/22, F02C 7/22, F02C 9/40

(54) **SYSTEMS AND METHODS FOR FUEL CELL AUXILIARY POWER IN SECONDARY FUEL APPLICATIONS**
SYSTEME UND VERFAHREN ZUR BRENNSTOFFZELLEN-HILFSENERGIE IN SEKUNDÄREN BRENNSTOFFANWENDUNGEN
SYSTÈMES ET PROCÉDÉS D'ALIMENTATION AUXILIAIRE DE PILE À COMBUSTIBLE DANS DES APPLICATIONS DE CARBURANT SECONDAIRES

(30) Priority: 02.01.2020 US 202016732774
(43) Date of publication of application: 07.07.2021
(73) Proprietor: Raytheon Technologies Corporation, Farmington, CT 06032 (US)
(72) Inventor: ROBERGE, Gary D., Tolland, CT 06084 (US)
(74) Representative: Dehns

(56) References cited:
- EP-A1- 1 197 258
- DE-T5-112013 005 404
- US-A1- 2002 043 064
- US-A1- 2014 202 167
- US-A1- 2015 308 297

## Description

### FIELD

The present disclosure relates generally to aircraft systems and, more particularly, to aircraft power plant and auxiliary systems.

### BACKGROUND

It has been proposed to operate gas turbine engines, such as those used to propel aircraft, by using more than one type of fuel. Such fuels may be used together simultaneously or selectively during differing periods of operation. In such regimes, it is usual to use a conventional fuel such as, for example, kerosene as the primary fuel and a secondary fuel such as a cryogenic liquid fuel. The cryogenic fuel may be burned to power the engine either simultaneously with the primary fuel or as a substitute during certain periods of engine operation. Operating engines with blended traditional and cryogenic fuels may tend to enhance engine performance.

DE 11 2013 005 404 T5 discloses a power generation system having a gas turbine, a fuel cell, an exhaust air circulation line, an exhaust fuel gas supply line, a turbine, an exhaust heat recovery boiler, and at least one exhaust air heat exchanger.

US 2014/0202167 A1 discloses a power generation system including a fuel cell.

### SUMMARY

From a first aspect, the invention provide a cryogenic fuel auxiliary power system for an engine as claimed in claim 1.

In various embodiments, a byproduct line may be in fluid communication with the fuel cell and a byproduct storage tank, wherein the fuel cell is configured to supply byproduct to the byproduct storage tank in response to receiving the fuel flow. In various embodiments, a transfer pump may be in fluid communication between the fuel cell and the byproduct storage tank. In various embodiments, a third valve may be in fluid communication between the byproduct storage tank and the engine, wherein the third valve is configured to supply the byproduct to a mass injection system of the engine. In various embodiments, a second pump may be in fluid communication between the third valve and the engine, wherein the second pump is configured to boost the pressure of the byproduct above an operating pressure of the engine. In various embodiments, a fourth valve may be in fluid communication between the byproduct storage tank and a drain.

In various embodiments, the operations further comprise determining a first operating condition of the engine, configuring the second valve to enable fluid communication between the fuel cell and the first heat exchanger in response to the first operating condition, and configuring the first valve to supply a first portion of the fuel flow to the fuel cell and a second portion of the fuel flow to the first heat exchanger in response to the first operating condition.

In various embodiments, the operations further comprise determining a second operating condition of the engine, configuring the second valve to inhibit fluid communication between the fuel cell and the first heat exchanger in response to the second operating condition, and configuring the first valve to supply the fuel flow to the first heat exchanger in response to the second operating condition. In various embodiments, the operations further comprise determining a mass injection condition and controlling a third valve to enable fluid communication between the byproduct tank and the engine in response to the mass injection condition. In various embodiments, the operation further comprise receiving a fluid level signal from a fluid level sensor in electronic communication with the controller and controlling a fourth valve in response to the fluid level signal.

From a further aspect, the invention provides a method of controlling a cryogenic fuel auxiliary power system for an engine as claimed in claim 11.

In various embodiments, method includes determining a first operating condition of the engine, configuring the second valve to enable fluid communication between the fuel cell and the first heat exchanger in response to the first operating condition, and configuring the first valve to supply a first portion of the fuel flow to the fuel cell and a second portion of the fuel flow to the first heat exchanger in response to the first operating condition.

In various embodiments, method includes determining a second operating condition of the engine, configuring the second valve to inhibit fluid communication between the fuel cell and the first heat exchanger in response to the second operating condition, and configuring the first valve to supply the fuel flow to the first heat exchanger in response to the second operating condition. In various embodiments, method includes determining a mass injection condition and controlling a third valve to enable fluid communication between the byproduct tank and the engine in response to the mass injection condition. In various embodiments, method includes receiving a fluid level signal from a fluid level sensor in electronic communication with the controller and controlling a fourth valve in response to the fluid level signal.

From a further aspect of the invention, an article of manufacture as claimed in claim 14 is provided. In various embodiments, the operations further comprise determining a first operating condition of the engine, configuring the second valve to enable fluid communication between the fuel cell and the first heat exchanger in response to the first operating condition, and configuring the first valve to supply a first portion of the fuel flow to the fuel cell and a second portion of the fuel flow to the first heat exchanger in response to the first operating condition.

In various embodiments, the operations further comprise determining a second operating condition of the engine, configuring the second valve to inhibit fluid communication between the fuel cell and the first heat exchanger in response to the second operating condition, and configuring the first valve to supply the fuel flow to the first heat exchanger in response to the second operating condition. In various embodiments, the operations further comprise determining a mass injection condition and controlling a third valve to enable fluid communication between the byproduct tank and the engine in response to the mass injection condition. In various embodiments, the operation further comprise receiving a fluid level signal from a fluid level sensor in electronic communication with the controller and controlling a fourth valve in response to the fluid level signal. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1A illustrates an exemplary aircraft, in accordance with various embodiments;
FIG. 1B illustrates an exemplary gas turbine engine, in accordance with various embodiments;
FIG. 2 illustrates a cryogenic fuel auxiliary power system for an engine, in accordance with various embodiments; and
FIG. 3 illustrates a method of controlling a cryogenic fuel auxiliary power system for an engine, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation.

The scope of the disclosure is defined by the appended claims rather than by merely the examples described. For example, any reference to singular includes plural embodiments, and any reference to more than one component or step may include a singular embodiment or step. Also, any reference to attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

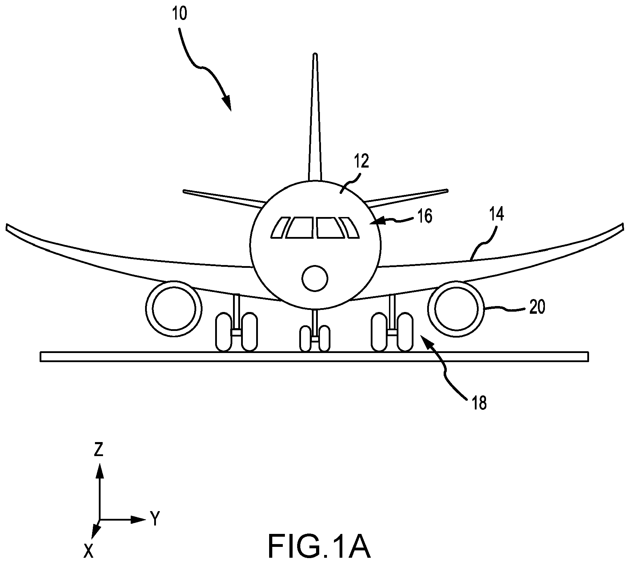

With reference to FIG. 1A, an aircraft 10 is illustrated in accordance with various embodiments. Aircraft 10 comprises a fuselage 12, wings 14, cockpit controls 16, landing gear 18, and a propulsion system, such as gas turbine engines 20. In various embodiments, aircraft 10 may include a cryogenic fuel auxiliary power system 200.

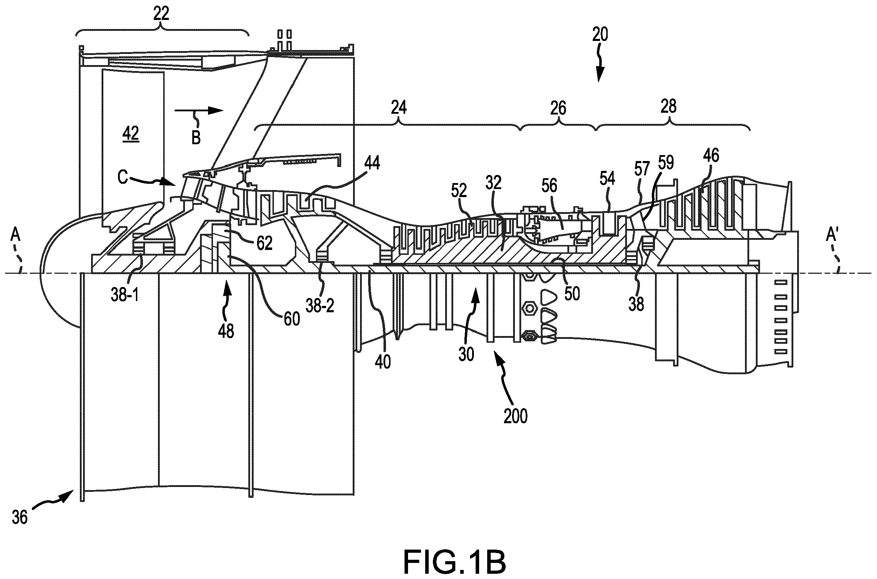

In various embodiments and with reference to FIG. 1B, a gas turbine engine 20 is provided. Gas turbine engine 20 may be a two-spool turbofan that generally incorporates a fan section 22, a compressor section 24, a combustor section 26 and a turbine section 28. In operation, fan section 22 can drive air along a bypass flow-path B while compressor section 24 can drive air through a core flow-path C for compression and communication into combustor section 26 then expansion through turbine section 28. In various embodiments, gas turbine engine 20 may incorporate a plurality of engine accessories such as, for example, components of power transfer system 200. Although depicted as a turbofan gas turbine engine 20 herein, it should be understood that the concepts described herein are not limited to use with turbofans as the teachings may be applied to other types of engines including turbojet engines, a low-bypass turbofans, a high bypass turbofans, reciprocating engines, or any other internal combustion engine known to those skilled in the art.

Gas turbine engine 20 may generally comprise a low speed spool 30 and a high speed spool 32 mounted for rotation about an engine central longitudinal axis A-A' relative to an engine static structure 36 via one or more bearing systems 38 (shown as bearing system 38-1 and bearing system 38-2). It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure (or first) compressor section 44 (also referred to a low pressure compressor) and a low pressure (or first) turbine section 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor ("HPC") 52 (e.g., a second compressor section) and high pressure (or second) turbine section 54. A combustor 56 may be located between HPC 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then HPC 52, mixed and burned with fuel in combustor 56, then expanded over high pressure turbine 54 and low pressure turbine 46. Mid-turbine frame 57 includes airfoils 59 which are in the core airflow path. Low pressure turbine 46, and high pressure turbine 54 rotationally drive the respective low speed spool 30 and high speed spool 32 in response to the expansion.

Gas turbine engine 20 may be, for example, a high-bypass geared aircraft engine. In various embodiments, the bypass ratio of gas turbine engine 20 may be greater than about six (6). In various embodiments, the bypass ratio of gas turbine engine 20 may be greater than ten (10). In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about 5. In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other gas turbine engines including direct drive turbofans.

In various embodiments, the next generation of turbofan engines may be designed for higher efficiency which is associated with higher pressure ratios and higher temperatures in the HPC 52. These higher operating temperatures and pressure ratios may create operating environments that may cause thermal loads that are higher than the thermal loads encountered in conventional turbofan engines, which may shorten the operational life of current components.

In various embodiments, HPC 52 may comprise alternating rows of rotating rotors and stationary stators. Stators may have a cantilevered configuration or a shrouded configuration. More specifically, a stator may comprise a stator vane, a casing support and a hub support. In this regard, a stator vane may be supported along an outer diameter by a casing support and along an inner diameter by a hub support. In contrast, a cantilevered stator may comprise a stator vane that is only retained and/or supported at the casing (e.g., along an outer diameter).

In various embodiments, rotors may be configured to compress and spin a fluid flow. Stators may be configured to receive and straighten the fluid flow. In operation, the fluid flow discharged from the trailing edge of stators may be straightened (e.g., the flow may be directed in a substantially parallel path to the centerline of the engine and/or HPC) to increase and/or improve the efficiency of the engine and, more specifically, to achieve maximum and/or near maximum compression and efficiency when the straightened air is compressed and spun by rotor 64.

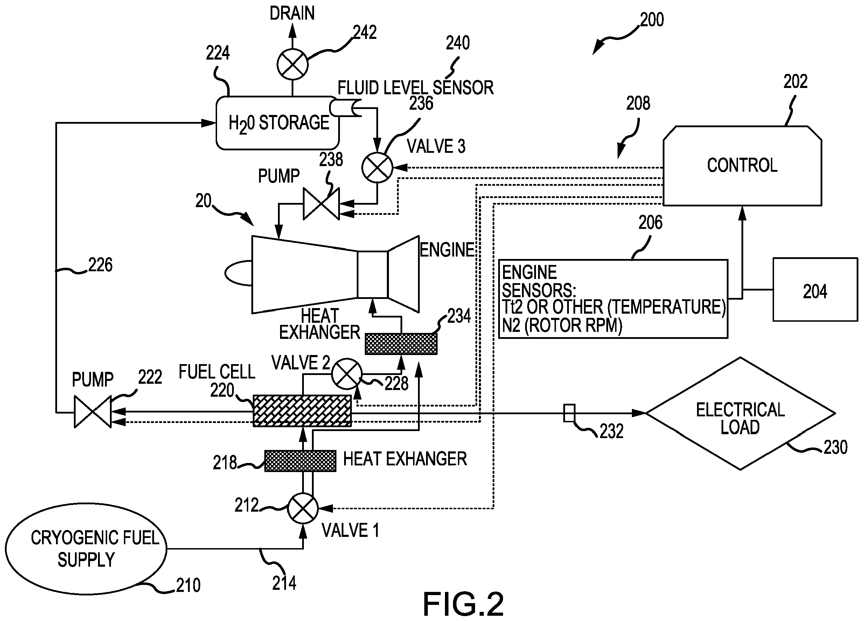

With additional reference to FIG. 2, system 200 is shown integrated with the gas turbine engine 20 of aircraft 10 according to various embodiments. System 200 includes a controller 202 which may be integrated into computer systems onboard aircraft 10. In various embodiments, controller 202 may be configured as a central network element or hub to access various systems, engines, and components of system 200. Controller 202 may comprise a network, computer-based system, and/or software components configured to provide an access point to various systems, engines, and components of system 200. In various embodiments, controller 202 may comprise a processor. In various embodiments, controller 202 may be implemented in a single processor. In various embodiments, controller 202 may be implemented as and may include one or more processors and/or one or more tangible, non-transitory memories and be capable of implementing logic. Each processor can be a general purpose processor, a digital signal processor (DSP), an application specific integrated circuit (ASIC), a field programmable gate array (FPGA) or other programmable logic device, discrete gate or transistor logic, discrete hardware components, or any combination thereof. Controller 202 may comprise a processor configured to implement various logical operations in response to execution of instructions, for example, instructions stored on a non-transitory, tangible, computer-readable medium configured to communicate with controller 202. In this regard, controller 202 may be configured to control various components of system 200 via control signals 208.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se and includes all standard computer-readable media that are not only propagating transitory signals per se.

In various embodiments, controller 202 may be in electronic communication with a pilot through a control interface 204 of cockpit controls 16, for example, a multifunction display, a switch panel, and/or the like which an operator can operate. The control interface 204 may enable the operator to interact with system 200 for example, to issue commands, display information such as, for example, warnings, or receive outputs. Control interface 204 may comprise any suitable combination of hardware, software, and/or database components. System 200 comprises one or more feedback elements to monitor and measure aircraft 10 and gas turbine engine 20 characteristics. For example, controller 202 is in electronic communication with sensors 206 that may be coupled to or in direct electronic communication with aircraft systems such as, for example, propulsion systems, fuel systems (e.g., primary and/or cryogenic fuel systems), and/or the like. Controller 202 may be in electronic communication with the full suite of aircraft sensors and other data sources available within and without the aircraft 10. Sensors 206 may comprise a temperature sensor, a torque sensor, a speed sensor, a pressure sensor, a position sensor, an accelerometer, a voltmeter, an ammeter, a wattmeter, an optical sensor, or any other suitable measuring device known to those skilled in the art. Sensors 206 may be configured to transmit measurements to controller 202, thereby providing sensor feedback about the measured system. The sensor feedback may be, for example, a speed signal, or may be position feedback, temperature feedback, pressure feedback or other data.

System 200 includes a cryogenic fuel supply 210 which may be configured to store a fuel such as a cryogenic liquid fuel. In various embodiments, the fuel may be one of molecular hydrogen, methane, ethane, propane, butane, natural gas and/or the like. The secondary fuel supply 210 is in fluid communication with a bypass-control valve 212 (e.g., a first valve) via supply line 214. The bypass-control valve 212 is in fluid communication with a fuel cell 220 and is configured to control the fuel flow to a fuel cell 220.

According to the claimed invention, bypass-control valve 212 is in fluid communication with a primary heat exchanger 234 (i.e., a first heat exchanger) and is configured to distribute fuel flow to the primary heat exchanger 234. In this regard, bypass-control valve 212 may distribute the fuel flow relatively between the fuel cell 220 and the primary heat exchanger 234 or may be configured to bypass the fuel cell 220. The primary heat exchanger 234 may extract heat from the gas turbine engine 20 and impart heat energy to the cryogenic fuel. In this regard, the primary heat exchanger 234 is configured to vaporize and expand the cryogenic fuel and deliver heated gaseous fuel to a combustion chamber of the engine (e.g., combustor 56). The bypass-control valve 212 is in fluid communication with a secondary heat exchanger 218 (i.e., a second heat exchanger) configured to impart heat energy to the cryogenic fuel and provide heated fuel to the fuel cell 220.

In various embodiments, the fuel cell 220 may be electrically coupled to an electrical load 230 such as, for example, an electrical power system of aircraft 10. In response to receiving the fuel from the bypass-control valve 212, the fuel cell 220 may consume a portion of the fuel to generate electrical power and a byproduct such as, for example, liquid water. In various embodiments, the electrical load 230 may be disconnected from the fuel cell 220 by, for example, an electrical load disconnect relay 232. According to the claimed invention, the fuel cell 220 is in fluid communication with an isolation valve 228 (e.g., a second valve) and may pass an unused portion of the fuel to the isolation valve. The fuel cell 220 is in fluid communication with a byproduct storage tank 224. In various embodiments, a transfer pump 222 (e.g., a first pump) is configured to byproduct from the fuel cell 220 to the water storage tank 224 via waste water lines 226.

Water storage tank 224 is in fluid communication with an injection valve 236 (e.g., a third valve) which is configured to regulate fluid communication between the byproduct storage tank 224 and the gas turbine engine 20. In various embodiments, the injection valve 236 may thereby provide the byproduct to a mass injection system of the gas turbine engine configured to deliver the byproduct to a compressor stage, an intercooler, an aftercooler, a combustor, a turbine stage, and/or the like and thereby tend to improve the performance of the gas turbine engine 20. For example, performance may be improved by an increase in mass flow along with an accompanying change in air temperature within the gas turbine due to a latent heat of evaporation of the injected byproduct (e.g., liquid water). The increased mass flow may tend to increase generated thrust by the gas turbine engine 20. In various embodiments, a mass injection system may generate multiple beneficial effects including reducing the temperature of air compressed in engine 20's fan 42 and/or low pressure compressor 44 and/or high pressure compressor 52. In this regard, by tending to enable reduction in air temperature during the most severe operating conditions, system 200 may thereby enhance the durability and reliability of gas turbine engine 20 components.

In various embodiments, an injector pump 238 (e.g., a second pump) may be in fluid communication relatively between the injector valve 236 and the gas turbine engine 20. The injector pump 238 may be configured to increase the pressure of the byproduct above an operating pressure of the gas turbine engine 20. In various embodiments, the byproduct storage tank 223 may include a fluid level sensor 240 in communication with the controller 202. The byproduct storage tank 224 may be in fluid communication with a drain valve 242 (e.g., a fourth valve) which may be controlled by controller 202 in response to a signal from the fluid level sensor 240. In this regard, the controller 202 may tend to inhibit overfilling of the byproduct storage tank 224.

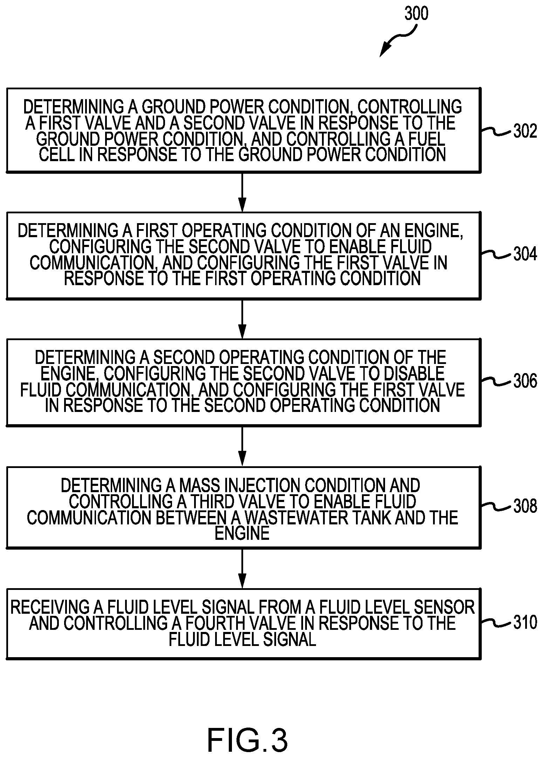

With additional reference to FIG. 3, a method 300 of controlling a cryogenic fuel auxiliary power system is illustrated according to various embodiments. Method 300 comprises determining a ground power condition, controlling the first valve and the second valve in response to the ground power condition, and controlling the fuel cell in response to the ground power condition (step 302). Method 300 includes determining a first operating condition of the engine, configuring the second valve to enable fluid communication between the fuel cell and the primary heat exchanger in response to the first operating condition, and configuring the first valve to supply a first portion of the fuel flow to the fuel cell and a second portion of the fuel flow to the primary heat exchanger in response to the first operating condition (step 304). Method 300 includes determining a second operating condition of the engine, configuring the second valve to inhibit fluid communication between the fuel cell and the primary heat exchanger in response to the second operating condition, and configuring the first valve to supply the fuel flow to the primary heat exchanger in response to the second operating condition (step 306). Method 300 includes determining a mass injection condition and controlling a third valve to enable fluid communication between the byproduct tank and the engine in response to the mass injection condition (step 308). In various embodiments, method 300 includes receiving a fluid level signal from a fluid level sensor in electronic communication with the controller and controlling a fourth valve in response to the fluid level signal (step 310).

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the invention in alternative embodiments. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A cryogenic fuel auxiliary power system (200) for an engine (20), comprising:
a cryogenic fuel supply (210);
a first valve (212) in fluid communication with the cryogenic fuel supply and configured to control a fuel flow;
a first heat exchanger (234), configured to receive the fuel flow, in fluid communication with the first valve and configured to be in fluid communication with a combustion chamber of the engine;
a fuel cell (220) in fluid communication between the first valve and the first heat exchanger; a second valve (228) in fluid communication with the fuel cell and the first heat exchanger and configured to interrupt the fluid communication therebetween;
a second heat exchanger (218) in fluid communication between the first valve and the fuel cell;
a controller (202);
a sensor (206) in communication with the controller and configured to provide sensor feedback; and
a tangible, non-transitory memory configured to communicate with the controller, the tangible, non-transitory memory having instructions stored thereon that, in response to execution by the controller, cause the controller to perform operations comprising:
determining, by the controller, a ground power condition;
controlling, by the controller, the first valve to enable fluid communication and the second valve to interrupt fluid communication in response to the ground power condition; and
controlling, by the controller, the fuel cell in response to the ground power condition.

2. The system (200) of claim 1, further comprising a byproduct line in fluid communication with the fuel cell (220) and configured to be in fluid communication with a byproduct storage tank (224), wherein the fuel cell is configured to supply byproduct to the byproduct storage tank in response to receiving the fuel flow.

3. The system (200) of claim 2, further comprising a transfer pump (222) in fluid communication between the fuel cell (220) and the byproduct storage tank.

4. The system (200) of claim 3, further comprising a third valve (236) configured to be in fluid communication between the byproduct storage tank and the engine, wherein the third valve is configured to supply the byproduct to a mass injection system of the engine (20).

5. The system (200) of claim 4, further comprising a second pump (238) in fluid communication between the third valve and the engine (20), wherein the second pump is configured to boost the pressure of the byproduct above an operating pressure of the engine.

6. The system (200) of claim 4 or 5, further comprising a fourth valve in fluid communication between the byproduct storage tank and a drain.

7. The system (200) of any preceding claim, wherein the operations further comprise:
determining, by the controller (202), a first operating condition of the engine (20);
configuring, by the controller, the second valve (228) to enable fluid communication between the fuel cell (220) and the first heat exchanger (234) in response to the first operating condition; and
configuring, by the controller, the first valve (212) to supply a first portion of the fuel flow to the fuel cell and a second portion of the fuel flow to the first heat exchanger in response to the first operating condition.

8. The system (200) of claim 7, wherein the operations further comprise:
determining, by the controller (202), a second operating condition of the engine (20);
configuring, by the controller, the second valve (228) to inhibit fluid communication between the fuel cell (220) and the first heat exchanger (234) in response to the second operating condition; and
configuring, by the controller, the first valve (212) to supply the fuel flow to the first heat exchanger in response to the second operating condition.

9. The system (200) of claim 8, wherein the operations further comprise:
determining, by the controller (202), a mass injection condition; and
controlling, by the controller, the third valve to enable fluid communication between the byproduct storage tank and the engine in response to the mass injection condition.

10. The system (200) of claim 9, wherein the operations further comprise:
receiving, by the controller (202), a fluid level signal from a fluid level sensor in electronic communication with the controller; and
controlling, by the controller, the fourth valve in response to the fluid level signal.

11. A method for controlling a cryogenic fuel auxiliary power system (200) for an engine (20) as claimed in claim 1, the method comprising:
determining, by a controller (202), a ground power condition;
controlling, by the controller, the first valve (212) and the second valve (228) in response to the ground power condition; and
controlling, by the controller, the fuel cell (220) in response to the ground power condition.

12. The method of claim 11, further comprising:
determining, by the controller (202), a first operating condition of the engine (20);
configuring, by the controller, the second valve (228) to enable fluid communication between the fuel cell (220) and the first heat exchanger (234) in response to the first operating condition; and
configuring, by the controller, the first valve (212) to supply a first portion of a fuel flow to the fuel cell and a second portion of the fuel flow to the first heat exchanger in response to the first operating condition.

13. The method of claim 12, further comprising:
determining, by the controller (202), a second operating condition of the engine (20);
configuring, by the controller, the second valve (228) to inhibit fluid communication between the fuel cell (220) and the first heat exchanger (234) in response to the second operating condition; and
configuring, by the controller, the first valve (212) to supply the fuel flow to the first heat exchanger in response to the second operating condition.

14. An article of manufacture including a tangible, non-transitory computer-readable storage medium having instructions stored thereon that, in response to execution by a processor, cause the processor to perform operations for controlling a cryogenic fuel auxiliary power system (200) for an engine (20) as claimed in claim 1, the operations comprising:
determining, by the processor, a ground power condition;
controlling, by the processor, the first valve (212) and the second valve (228) in response to the ground power condition; and
controlling, by the processor, the fuel cell (220) in response to the ground power condition.

15. The article of manufacture of claim 14, wherein the operations further comprise:
determining, by the processor, a first operating condition of an engine (20);
configuring, by the processor, the second valve (228) to enable fluid communication between the fuel cell (220) and the first heat exchanger (234) in response to the first operating condition; and
configuring, by the processor, the first valve (212) to supply a first portion of a fuel flow to the fuel cell and a second portion of the fuel flow to the first heat exchanger in response to the first operating condition,
wherein, optionally, the operations further comprise:
determining, by the processor, a second operating condition of the engine;
configuring, by the processor, the second valve to inhibit fluid communication between the fuel cell and the first heat exchanger in response to the second operating condition; and
configuring, by the processor, the first valve to supply the fuel flow to the first heat exchanger in response to the second operating condition,
wherein, optionally, the operations further comprise:
determining, by the processor, a mass injection condition; and
controlling, by the processor, a third valve to enable fluid communication between a byproduct storage tank and the engine in response to the mass injection condition.

## Patentansprüche

1. Hilfsenergiesystem (200) für kryogenen Brennstoff für einen Motor (20), umfassend:
eine kryogene Brennstoffversorgung (210);
ein erstes Ventil (212), das in Fluidverbindung mit der kryogenen Brennstoffversorgung steht und dazu konfiguriert ist, einen Brennstofffluss zu steuern;
einen ersten Wärmetauscher (234), der dazu konfiguriert ist, den Brennstoffstrom aufzunehmen, in Fluidverbindung mit dem ersten Ventil steht und dazu konfiguriert ist, in Fluidverbindung mit einer Brennkammer des Motors zu stehen;
eine Brennstoffzelle (220) in Fluidverbindung zwischen dem ersten Ventil und dem ersten Wärmetauscher; ein zweites Ventil (228), das in Fluidverbindung mit der Brennstoffzelle und dem ersten Wärmetauscher steht und dazu konfiguriert ist, die Fluidverbindung zwischen diesen zu unterbrechen;
einen zweiten Wärmetauscher (218) in Fluidverbindung zwischen dem ersten Ventil und der Brennstoffzelle;
eine Steuereinrichtung (202);
einen Sensor (206) in Kommunikationsverbindung mit der Steuereinrichtung, der dazu konfiguriert ist, eine Sensorrückmeldung bereitzustellen; und
einen greifbaren, nichtflüchtigen Speicher, der dazu konfiguriert ist, mit der Steuereinrichtung zu kommunizieren, wobei in dem greifbaren, nichtflüchtigen Speicher Anweisungen gespeichert sind, die als Reaktion auf die Ausführung durch die Steuereinrichtung die Steuereinrichtung veranlassen, Vorgänge durchzuführen, umfassend:
Bestimmen einer Bodenstrombedingung durch die Steuereinrichtung;
Steuern des ersten Ventils durch die Steuereinrichtung, um die Fluidverbindung zu ermöglichen, und des zweiten Ventils, um die Fluidverbindung als Reaktion auf die Bodenstrombedingung zu unterbrechen; und
Steuern der Brennstoffzelle durch die Steuereinrichtung als Reaktion auf die Bodenstrombedingung.

2. System (200) nach Anspruch 1, ferner umfassend eine Nebenproduktleitung in Fluidverbindung mit der Brennstoffzelle (220), die dazu konfiguriert ist, in Fluidverbindung mit einem Nebenproduktspeichertank (224) zu stehen, wobei die Brennstoffzelle dazu konfiguriert ist, als Reaktion auf die Aufnahme des Brennstoffflusses dem Nebenproduktspeichertank Nebenprodukt zuzuführen.

3. System (200) nach Anspruch 2, ferner umfassend eine Transferpumpe (222) in Fluidverbindung zwischen der Brennstoffzelle (220) und dem Nebenproduktspeichertank.

4. System (200) nach Anspruch 3, ferner umfassend ein drittes Ventil (236), das dazu konfiguriert ist, in Fluidverbindung zwischen dem Nebenproduktspeichertank und dem Motor zu stehen, wobei das dritte Ventil dazu konfiguriert ist, das Nebenprodukt einem Masseneinspritzsystem des Motors (20) zuzuführen.

5. System (200) nach Anspruch 4, ferner umfassend eine zweite Pumpe (238) in Fluidverbindung zwischen dem dritten Ventil und dem Motor (20), wobei die zweite Pumpe dazu konfiguriert ist, den Druck des Nebenprodukts über einen Betriebsdruck des Motors hinaus zu erhöhen.

6. System (200) nach Anspruch 4 oder 5, ferner umfassend ein viertes Ventil in Fluidverbindung zwischen dem Nebenproduktspeichertank und einem Abfluss.

7. System (200) nach einem der vorhergehenden Ansprüche, ferner umfassend:
Bestimmen einer ersten Betriebsbedingung des Motors (20) durch die Steuereinrichtung (202);
Konfigurieren des zweiten Ventils (228) durch die Steuereinrichtung, um als Reaktion auf die erste Betriebsbedingung eine Fluidverbindung zwischen der Brennstoffzelle (220) und dem ersten Wärmetauscher (234) zu ermöglichen; und
Konfigurieren des ersten Ventils (212) durch die Steuereinrichtung, um als Reaktion auf die erste Betriebsbedingung einen ersten Teil des Brennstoffstroms der Brennstoffzelle und einen zweiten Teil des Brennstoffstroms dem ersten Wärmetauscher zuzuführen.

8. System (200) nach Anspruch 7, wobei die Vorgänge ferner umfassen:
Bestimmen einer zweiten Betriebsbedingung des Motors (20) durch die Steuereinrichtung (202);
Konfigurieren des zweiten Ventils (228) durch die Steuereinrichtung, um als Reaktion auf die zweite Betriebsbedingung eine Fluidverbindung zwischen der Brennstoffzelle (220) und dem ersten Wärmetauscher (234) zu unterbinden; und
Konfigurieren des ersten Ventils (212) durch die Steuereinrichtung, um als Reaktion auf die zweite Betriebsbedingung den Brennstoffstrom dem ersten Wärmetauscher zuzuführen.

9. System (200) nach Anspruch 8, wobei die Vorgänge ferner umfassen:
Bestimmen einer Masseneinspritzbedingung durch die Steuereinrichtung (202); und
Steuern des dritten Ventils durch die Steuereinrichtung, um als Reaktion auf die Masseneinspritzbedingung eine Fluidverbindung zwischen dem Nebenproduktspeichertank und dem Motor zu ermöglichen.

10. System (200) nach Anspruch 9, wobei die Vorgänge ferner umfassen:
Empfangen eines Fluidpegelsignals von einem Fluidpegelsensor in elektronischer Kommunikationsverbindung mit der Steuereinrichtung durch die Steuereinrichtung (202); und
Steuern des vierten Ventils durch die Steuereinrichtung als Reaktion auf das Fluidpegelsignal.

11. Verfahren zum Steuern eines Hilfsenergiesystems (200) für kryogenen Brennstoff für einen Motor (20) nach Anspruch 1, wobei das Verfahren umfasst:
Bestimmen einer Bodenstrombedingung durch eine Steuereinrichtung (202);
Steuern des ersten Ventils (212) und des zweiten Ventils (228) durch die Steuereinrichtung als Reaktion auf die Bodenstrombedingung; und
Steuern der Brennstoffzelle (220) durch die Steuereinrichtung als Reaktion auf die Bodenstrombedingung.

12. Verfahren nach Anspruch 11, ferner umfassend:
Bestimmen einer ersten Betriebsbedingung des Motors (20) durch die Steuereinrichtung (202);
Konfigurieren des zweiten Ventils (228) durch die Steuereinrichtung, um als Reaktion auf die erste Betriebsbedingung eine Fluidverbindung zwischen der Brennstoffzelle (220) und dem ersten Wärmetauscher (234) zu ermöglichen; und
Konfigurieren des ersten Ventils (212) durch die Steuereinrichtung, um als Reaktion auf die erste Betriebsbedingung einen ersten Teil eines Brennstoffstroms der Brennstoffzelle und einen zweiten Teil des Brennstoffstroms dem ersten Wärmetauscher zuzuführen.

13. Verfahren nach Anspruch 12, ferner umfassend:
Bestimmen einer zweiten Betriebsbedingung des Motors (20) durch die Steuereinrichtung (202);
Konfigurieren des zweiten Ventils (228) durch die Steuereinrichtung, um als Reaktion auf die zweite Betriebsbedingung eine Fluidverbindung zwischen der Brennstoffzelle (220) und dem ersten Wärmetauscher (234) zu unterbinden; und
Konfigurieren des ersten Ventils (212) durch die Steuereinrichtung, um als Reaktion auf die zweite Betriebsbedingung den Brennstoffstrom dem ersten Wärmetauscher zuzuführen.

14. Herstellungsartikel, der ein physisches, nichtflüchtiges computerlesbares Speichermedium beinhaltet, das darauf gespeicherte Anweisungen aufweist, die als Reaktion auf die Ausführung durch einen Prozessor den Prozessor dazu veranlassen, Vorgänge zum Steuern eines Hilfsenergiesystems (200) für kryogenen Brennstoff für einen Motor (20) nach Anspruch 1 durchzuführen, wobei die Vorgänge umfassen:
Bestimmen einer Bodenstrombedingung durch den Prozessor;
Steuern des ersten Ventils (212) und des zweiten Ventils (228) durch den Prozessor als Reaktion auf die Bodenstrombedingung; und
Steuern der Brennstoffzelle (220) durch den Prozessor als Reaktion auf die Bodenstrombedingung.

15. Herstellungsartikel nach Anspruch 14, wobei die Vorgänge ferner umfassen:
Bestimmen einer ersten Betriebsbedingung des Motors (20) durch den Prozessor;
Konfigurieren des zweiten Ventils (228) durch den Prozessor, um eine Fluidverbindung zwischen der Brennstoffzelle (220) und dem ersten Wärmetauscher (234) als Reaktion auf die erste Betriebsbedingung zu ermöglichen; Und
Konfigurieren des ersten Ventils (212) durch den Prozessor, um als Reaktion auf die erste Betriebsbedingung einen ersten Teil des Brennstoffstroms der Brennstoffzelle und einen zweiten Teil des Brennstoffstroms dem ersten Wärmetauscher zuzuführen,
wobei die Vorgänge optional ferner umfassen:
Bestimmen eines zweiten Betriebszustands des Motors durch den Prozessor;
Konfigurieren des zweiten Ventils durch den Prozessor, um als Reaktion auf die zweite Betriebsbedingung eine Fluidverbindung zwischen der Brennstoffzelle und dem ersten Wärmetauscher zu unterbinden; und
Konfigurieren des ersten Ventils durch den Prozessor, um als Reaktion auf die zweite Betriebsbedingung den Brennstoffstrom dem ersten Wärmetauscher zuzuführen,
wobei die Vorgänge optional ferner umfassen:
Bestimmen einer Masseneinspritzbedingung durch den Prozessor; und
Steuern eines dritten Ventils durch den Prozessor, um als Reaktion auf die Masseneinspritzbedingung eine Fluidverbindung zwischen einem Nebenproduktspeichertank und dem Motor zu ermöglichen.

## Revendications

1. Système d'alimentation auxiliaire en carburant cryogénique (200) pour un moteur (20), comprenant :
une alimentation en carburant cryogénique (210) ;
une première vanne (212) en communication fluidique avec l'alimentation en carburant cryogénique et configurée pour commander un flux de carburant ;
un premier échangeur de chaleur (234), configuré pour recevoir le flux de carburant, en communication fluidique avec la première vanne et configuré pour être en communication fluidique avec une chambre de combustion du moteur ;
une pile à combustible (220) en communication fluidique entre la première vanne et le premier échangeur de chaleur ; une seconde vanne (228) en communication fluidique avec la pile à combustible et le premier échangeur de chaleur et configurée pour interrompre la communication fluidique entre eux ;
un second échangeur de chaleur (218) en communication fluidique entre la première vanne et la pile à combustible ;
un dispositif de commande (202) ;
un capteur (206) en communication avec le dispositif de commande et configuré pour fournir une rétroaction de capteur ; et
une mémoire tangible non transitoire configurée pour communiquer avec le dispositif de commande, la mémoire tangible non transitoire ayant des instructions stockées sur celle-ci, qui, en réponse à l'exécution par le dispositif de commande, amènent le dispositif de commande à exécuter des opérations comprenant :
la détermination, par le dispositif de commande, d'une condition d'alimentation au sol ;
la commande, par le dispositif de commande, de la première vanne pour permettre la communication fluidique et de la deuxième vanne pour interrompre la communication fluidique en réponse à la condition d'alimentation au sol ; et
la commande, par le dispositif de commande, de la pile à combustible en réponse à la condition d'alimentation au sol.

2. Système (200) selon la revendication 1, comprenant en outre une ligne de sous-produit en communication fluidique avec la pile à combustible (220) et configurée pour être en communication fluidique avec un réservoir de stockage de sous-produit (224), dans lequel la pile à combustible est configurée pour fournir un sous-produit au réservoir de stockage de sous-produit en réponse à la réception du flux de carburant.

3. Système (200) selon la revendication 2, comprenant en outre une pompe de transfert (222) en communication fluidique entre la pile à combustible (220) et le réservoir de stockage de sous-produit.

4. Système (200) selon la revendication 3, comprenant en outre une troisième vanne (236) configurée pour être en communication fluidique entre le réservoir de stockage de sous-produit et le moteur, dans lequel la troisième vanne est configurée pour fournir le sous-produit à un système d'injection de masse du moteur (20).

5. Système (200) selon la revendication 4, comprenant en outre une seconde pompe (238) en communication fluidique entre la troisième vanne et le moteur (20), dans lequel la seconde pompe est configurée pour augmenter la pression du sous-produit au-dessus d'une pression de fonctionnement du moteur.

6. Système (200) selon la revendication 4 ou 5, comprenant en outre une quatrième vanne en communication fluidique entre le réservoir de stockage de sous-produit et une vidange.

7. Système (200) selon une quelconque revendication précédente, dans lequel les opérations comprennent en outre :
la détermination, par le dispositif de commande (202), d'une première condition de fonctionnement du moteur (20) ;
la configuration, par le dispositif de commande, de la deuxième vanne (228) pour permettre une communication fluidique entre la pile à combustible (220) et le premier échangeur de chaleur (234) en réponse à la première condition de fonctionnement ; et la configuration, par le dispositif de commande, de la première vanne (212) pour fournir une première partie du flux de carburant à la pile à combustible et une seconde partie du flux de carburant au premier échangeur de chaleur en réponse à la première condition de fonctionnement.

8. Système (200) selon la revendication 7, dans lequel les opérations comprennent en outre :
la détermination, par le dispositif de commande (202), d'une seconde condition de fonctionnement du moteur (20) ;
la configuration, par le dispositif de commande, de la deuxième vanne (228) pour inhiber une communication fluidique entre la pile à combustible (220) et le premier échangeur de chaleur (234) en réponse à la seconde condition de fonctionnement ; et la configuration, par le dispositif de commande, de la première vanne (212) pour fournir le flux de carburant au premier échangeur de chaleur en réponse à la seconde condition de fonctionnement.

9. Système (200) selon la revendication 8, dans lequel les opérations comprennent en outre :
la détermination, par le dispositif de commande (202), d'une condition d'injection de masse ; et
la commande, par le dispositif de commande, de la troisième vanne pour permettre une communication fluidique entre le réservoir de stockage de sous-produit et le moteur en réponse à la condition d'injection de masse.

10. Système (200) selon la revendication 9, dans lequel les opérations comprennent en outre :
la réception, par le dispositif de commande (202), d'un signal de niveau de fluide provenant d'un capteur de niveau de fluide en communication électronique avec le dispositif de commande ; et
la commande, par le dispositif de commande, de la quatrième vanne en réponse au signal de niveau de fluide.

11. Procédé de commande d'un système d'alimentation auxiliaire en carburant cryogénique (200) pour un moteur (20) selon la revendication 1, le procédé comprenant :
la détermination, par un dispositif de commande (202), d'une condition d'alimentation au sol ;
la commande, par le dispositif de commande, de la première vanne (212) et de la deuxième vanne (228) en réponse à la condition d'alimentation au sol ; et
la commande, par le dispositif de commande, de la pile à combustible (220) en réponse à la condition d'alimentation au sol.

12. Procédé selon la revendication 11, comprenant en outre :
la détermination, par le dispositif de commande (202), d'une première condition de fonctionnement du moteur (20) ;
la configuration, par le dispositif de commande, de la deuxième vanne (228) pour permettre une communication fluidique entre la pile à combustible (220) et le premier échangeur de chaleur (234) en réponse à la première condition de fonctionnement ; et la configuration, par le dispositif de commande, de la première vanne (212) pour fournir une première partie d'un flux de carburant à la pile à combustible et une seconde partie du flux de carburant au premier échangeur de chaleur en réponse à la première condition de fonctionnement.

13. Procédé selon la revendication 12, comprenant en outre :
la détermination, par le dispositif de commande (202), d'une seconde condition de fonctionnement du moteur (20) ;
la configuration, par le dispositif de commande, de la deuxième vanne (228) pour inhiber une communication fluidique entre la pile à combustible (220) et le premier échangeur de chaleur (234) en réponse à la seconde condition de fonctionnement ; et la configuration, par le dispositif de commande, de la première vanne (212) pour fournir le flux de carburant au premier échangeur de chaleur en réponse à la seconde condition de fonctionnement.

14. Article manufacturé comportant un support de stockage tangible non transitoire lisible par ordinateur ayant des instructions stockées sur celui-ci qui, en réponse à l'exécution par un processeur, amènent le processeur à effectuer des opérations de commande d'un système d'alimentation auxiliaire en carburant cryogénique (200) pour un moteur (20) selon la revendication 1, les opérations comprenant :
la détermination, par le processeur, d'une condition d'alimentation au sol ;
la commande, par le processeur, de la première vanne (212) et la deuxième vanne (228) en réponse à la condition d'alimentation au sol ; et
la commande, par le processeur, de la pile à combustible (220) en réponse à la condition d'alimentation au sol.

15. Article manufacturé selon la revendication 14, dans lequel les opérations comprennent en outre :
la détermination, par le processeur, d'une première condition de fonctionnement du moteur (20) ;
la configuration, par le processeur, de la deuxième vanne (228) pour permettre une communication fluidique entre la pile à combustible (220) et le premier échangeur de chaleur (234) en réponse à la première condition de fonctionnement ; et
la configuration, par le processeur, de la première vanne (212) pour fournir une première partie d'un flux de carburant à la pile à combustible et une seconde partie du flux de carburant au premier échangeur de chaleur en réponse à la première condition de fonctionnement,
dans lequel, éventuellement, les opérations comprennent en outre :
la détermination, par le processeur, d'une seconde condition de fonctionnement du moteur ;
la configuration, par le processeur, de la deuxième vanne pour inhiber une communication fluidique entre la pile à combustible et le premier échangeur de chaleur en réponse à la seconde condition de fonctionnement ; et
la configuration, par le processeur, de la première vanne pour fournir le flux de carburant au premier échangeur de chaleur en réponse à la seconde condition de fonctionnement,
dans lequel, éventuellement, les opérations comprennent en outre :
la détermination, par le processeur, d'une condition d'injection de masse ; et
la commande, par le processeur, d'une troisième vanne pour permettre une communication fluidique entre un réservoir de stockage de sous-produit et le moteur en réponse à la condition d'injection de masse.
